# EUROPÄISCHE PATENTSCHRIFT

(11) **EP 0 826 947 B1**
(45) Veröffentlichungstag und Bekanntmachung des Hinweises auf die Patenterteilung: **29.10.2003**
(21) Anmeldenummer: 97114199.9
(22) Anmeldetag: 18.08.1997
(51) Int. Cl.: G01D 5/165

(54) **Wegmesssystem für Lineareinheiten**
Displacement transducer for linear units
Capteur de déplacement pour des unités linéaires

(30) Priorität: 24.08.1996 DE 19634308
(43) Veröffentlichungstag der Anmeldung: 04.03.1998
(73) Patentinhaber: A. Römheld GmbH & Co KG, 35321 Laubach (DE)
(72) Erfinder: Becker, Karl Heinz, 35321 Laubach (DE); Kröll, Harald, Dipl.-Ing., 35321 Laubach-Röthges (DE)
(74) Vertreter: von Ahsen, Erwin-Detlef

(56) Entgegenhaltungen:
- DE-A- 2 741 838
- GB-A- 2 253 059
- US-A- 4 583 032

## Beschreibung

Die Erfindung betrifft ein Wegmeßsystem einer Lineareinheit,
a) wobei das Wegmeßsystem ein Führungsrohr aufweist, in dem ein Schubrohr gleitend geführt ist,
b) wobei an dem Schubrohr ein Gleitring angebracht ist, der eine mit zwei oder mehreren Schleifkontakten bestückte Kontaktbrücke trägt,
c) wobei die Schleifkontakte auf zwei parallel In dem Führungsrohr in Längsrichtung eingelassenen Bahnen gleitend geführt sind, die aus einem elektrisch schlecht leitendem Material als Widerstandsbahn und aus einem elektrisch gut leitendem Material als Leiterbahn ausgebildet sind, und
d) wobei über die Kontaktbrücke ständig der Meßwert zwischen beiden Bahnen abgegriffen wird, so daß der wegabhängige Widerstand der Widerstandsbahn in die Messung eingeht,

Eine solches Wegmeßsystem ist aus der US 4 583 032 A bekannt.

Lineareinheiten finden ihre Anwendung im Bereich der Höhenverstellung von Geräten. Im industriellen Bereich sind das Verstellmechanismen von Klappen und Weichen. Im Krankenhausbereich sind das Verstellmechanismen für die Betten mit ihren Kopf- und Fußstützen. Insbesondere bei den Einzelverstellungen eines Krankenbettes ist ein exakter Antrieb gefordert, der jede Schädigung eines Patienten ausschließt. Darüber hinaus sind Krankenhausbetten so gestaltet, daß eine Schnellentriegelung der Antriebssysteme für den Notfall vorgesehen ist. Darüber hinaus besteht die Forderung der Fehlersicherheit, das bedeutet, daß im Fall eines beliebigen ersten Fehlers keine Gefährdung auftreten darf. Femer muß die Erkennbarkeit eines Fehlers für den Benutzer gegeben sein, was durch akustische oder optische Signale geschieht

Mit Hilfe von Meßsystemen wird in den Hubgeräten die jeweilige Stellung erfaßt. Es ist bekannt, in die Spindel der Verstellantriebe Dauermagnete einzubauen, die bei der Drehung der Spindel einen Magnetschalter zyklisch betätigen und so eine Weginformation liefern. Die Drehrichtung der Spindel ist hierbei der Steuerung vorgegeben. Der Nachteil einer solchen Anordnung ist, daß bei Hubgeräten mit Schnellentriegelung die Entriegelung ohne Stromversorgung erfolgt, so daß die Steuereinrichtung diese Verstellung nicht registriert. Auch ist eine Bestimmung der Drehrichtung mit nur einem Magnetschalter nicht möglich. Die Folge davon sind falsche Bettpositionen, die zu Kollisionen oder anderen Problemen führen.

Aus der US 4 583 032 A ist ein Wegmeßsystem bekannt, bei dem die Lageerfassung potentiometrisch mittels einer Kontaktbrücke, einer Widerstandsbahn und einer Leiterbahn erfolgt Zu diesem Zweck ist die Kontaktbrücke am Ende einer Schubstange angeordnet. Dieses Wegmeßsystem liefert eine gute Lageerfassung. Allerdings handelt es sich um eine gesondertes Wegmeßsystem, welches gesondert zu einer Lineareinheit verwendet wird. Ferner ist das Schubrohr nicht gegen das Führungsrohr gedichtet, so daß Schmutz und Wasser eindringen kann, so daß die Kontaktbürsten, die Widerstandsbahn und die Leiterbahn verschmutzen können und die Gefahr von Kurzschlüssen besteht.

Aus der DE 27 41 838 A1 ist eine Lineareinheit als Hubantrieb in einem Röntgengerät bekannt. Die Lineareinheit weißt eine angetriebene Spindel auf, auf der eine Spindelmutter gleitet. An der Spindelmutter ist ferner eine optische Skala angebracht, die aus der Lineareinheit herausgeführt ist und mittels derer die Hubhöhe ablesbar ist. Auch hier ist die Skala nicht gedichtet, so daß Wasser und Schmutz eindringen könnte. Die Spindelmutter übernimmt sowohl die Funktion der Lageerfsssung als auch der Kraftübertragung, was zu Meßungenauigkeiten führt.

Aufgabe der Erfindung ist es, ein Wegmeßsystem einer Lineareinheit anzugeben, bei der sich die Lageerfassung mit hoher Fehlersicherheit unabhängig von der Drehrichtung der Spindel durchführen läßt.

Diese Aufgabe wird dadurch gelöst, daß
e) das Schubrohr eine Spindel umgibt, auf der eine Spindelmutter gleitet, welche direkt oder über eine ausrückbare Kupplung mit dem Schubrohr verbunden ist, und daß
f) der Gleitring und die Spindelmutter an unterschiedlichen Punkten des Schubrohres befestigt sind.

Auf diese Weise ergibt sich ein kompakter Aufbau, bei dem das Schubrohr als Schubelement teleskopartig um die Spindel herum in dem Führungsrohr verschiebbar angeordnet ist. Es ist ein von der Spindelmutter gesonderter Gleitring vorgesehen, was die Fehtersicherheit unabhängig von der Drehrichtung der Spindel erhöht.

Die Erfindung wird nachfolgend anhand der Zeichnungen erläutert.

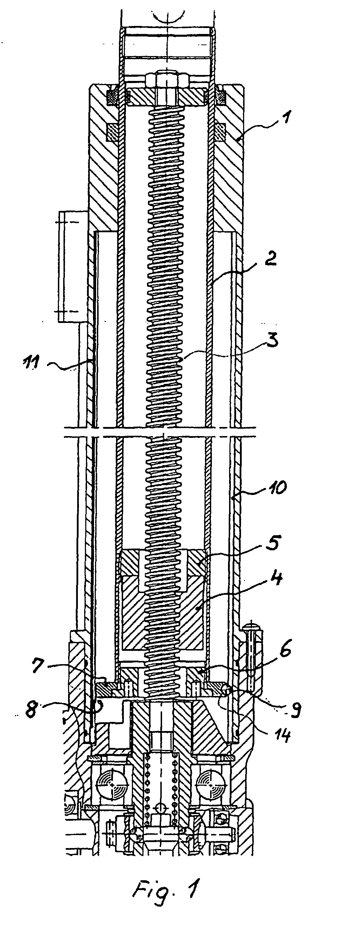

Fig. 1 zeigt den Spindelantrieb mit dem Wegmeßsystem.
Fig. 2 zeigt die Kontaktanordnung der Wegmeßeinheit und
Fig. 3 zeigt die Schaltung der Leiterbahnen

Der Spindelantrieb mit dem Wegmeßsystem besteht aus einem Führungsrohr 1, in das alle Teile integriert sind. In der Mitte des Führungsrohres 1 ist eine Spindel 3 angeordnet. Auf dieser Spindel 3 gleitet eine Spindelmutter 4. Diese Spindelmutter 4 schließt an ihrem oberen Ende mit einem Ring 5 ab, der fest in einem Schubrohr 2 sitzt. Das Schubrohr 2 ist innerhalb des Führungsrohres 1 geführt, und zwar über die Länge der Spindel 3. Wird die Spindel gedreht, so schiebt sich die Spindelmutter 4 je nach Drehrichtung der Spindel 3 nach oben oder unten. Mit der Spindelmutter 4 wird das Schubrohr 2 ebenfalls auf oder ab bewegt. Am unteren Ende des Schubrohres 2 ist ein ringförmiges Verbindungsteil 6 in das Schubrohr eingelassen und mit diesem fest verbunden, z.B. im Preßsitz. Das Verbindungsteil 6 ist seinerseits mit einem Gleitring 7 verbunden, der innerhalb des Führungsrohres 1 gleitend geführt ist. Dieser Gleitring 7 ist mit ein oder mehreren Aussparungen 14 an seiner äusseren Fläche versehen. In dem Führungsrohr 1 sind ein oder mehrere Führungsbahnen 10 in Längsrichtung eingelassen. Die Führungsbahnen 10 und die Aussparungen 14 sind sich gegenüberliegend angeordnet. Zwischen der jeweiligen Aussparung 14 und der zugehörigen Führungsbahn 10 sind Kugeln 9 eingefügt. Diese Kugeln 9 gleiten während des Bewegungsablaufes der Spindelmutter 4 in den Führungsbahnen 10 und werden in der dem Kugeldurchmesser angepaßten Aussparung 14 gehalten. Damit wird erreicht, daß der Gleitring 7 zusammen mit der Kontaktbrücke 13 verdrehsicher geführt ist. Diese Drehsicherung ist ein wichtiger Bestandteil für das Wegmeßsystem. Der Gleitring 7 ist am Schubrohr 2 verdrehbar befestigt.

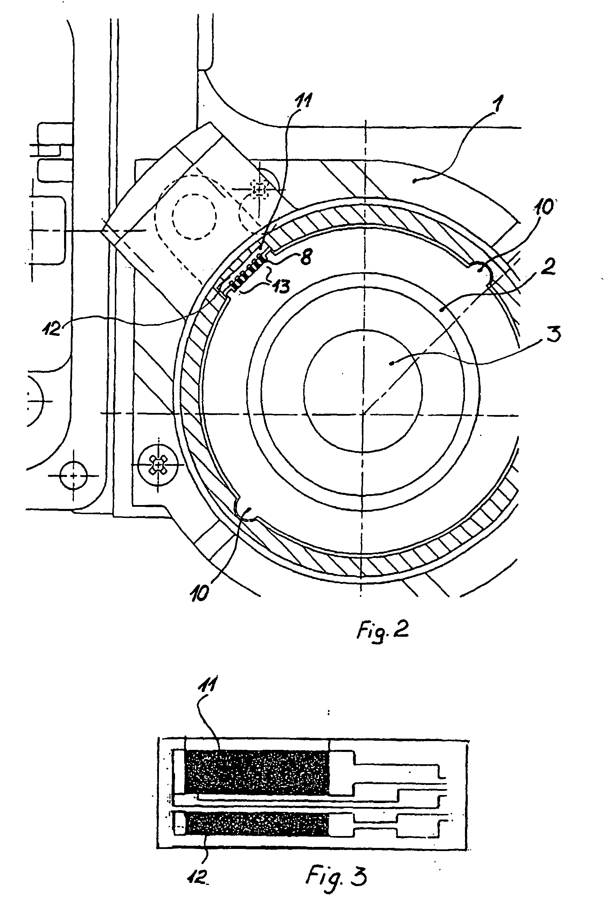

Das Wegmeßsystem besteht aus mindestens einer elektrischen Widerstandsbahn 11 und mindest einer elektrischen Leiterbahn 12 . Die Bahnen 11 und 12 sind in dem Führungsrohr 1 integriert und an der Innenwandung längs geführt. Diese beiden Bahnen 11 und 12 werden durch eine Kontaktbrücke 13 überbrückt. Die Kontaktbrücke 13 befindet sich im Gleitring 7, wie Fig. 2 zeigt. Die Kontaktbrücke 13 ist mit Schleifkontakten 8 bestückt, die auf den Bahnen 11 und 12 gleiten. An die Bahnen 11 und 12 sind elektrische Zuleitungen geführt, die diese Bahnen mit den Überwachungsgeräten verbinden. Die Kontaktbrücke 13 stellt eine Verbindung zwischen der Widerstandsbahn 11 und der Gleitbahn 12 her. Damit ist über diese Kontaktbrücke eine elektrische Größe abgreifbar, die sich aus dem Widerstand der Widerstandsbahn 11 ergibt. Je nachdem, wieviel Widerstand in die elektrische Messung einfließt ergibt sich ein Wert, der exakt dem zurückgelegten Weg der Spindelmutter entspricht. Dieses ist eine Folge des Bewegungsablaufes, in dem durch die Drehung der Spindel 3 die Spindelmutter 4 bewegt wird zusammen mit dem Schubrohr 2, womit die im Gleitring 7 integrierten Schleifkontakte 8 über die Bahnen 11 und 12 gleiten.

Damit ist diese Wegmessung eine exakte Bestimmung der Lage der Spindelmutter auf der Spindel. Diese Lageerfassung ist unabhängig von gewollten oder ungewollten Eingriffen in die Steuerung. So ist es erstmals möglich auch bei Stromausfall die Stellung der angeschlossen Geräte , wie Kopf- und Fußstützen am Bett zu speichern und bei Stromrückkehr allen angeschlossenen Arbeitsgerätschaften verfügbar zu machen. Auch bei Betätigung der Schnellentriegelung wird die neue Einstellung mitgeführt, da bei jeder Verstellung durch Schnellentriegelung immer die Schleifkontakte auf den Bahnen 11 und 12 mitgenommen werden und damit der neue Wert sofort allen Überwachungssystemen zur Verfügung steht.

Um den Umwelteinflüssen gerecht zu werden ist das Führungsrohr 1 wasserdicht und Schmutz geschützt ausgeführt. Ferner empfiehlt es sich den Gleitring 7 zusammen mit der Kontaktbrücke 13 verdrehsicher zu gestalten. Ebenso wird der Gleitring 7 am Schubrohr 2 verdrehsicher befestigt.

Der elektrische Widerstand, der als Meßgröße in der Widerstandsbahn 11 abnehmbar ist, kann auch als Spannungswert in die Messung einfließen. Dazu werden die elektrischen Anschlüsse der Bahnen 11 und 12 mit einer konstanten Spannung versorgt. An der Kontaktbrücke 13 ist damit eine elektrische Spannung abgreifbar, die sich aus dem Widerstandsverhältnis der von der Kontaktbrücke 13 abgetasteten Widerstandsbahn 11 ableitet. Diese Spannung entspricht dem Wert, der sich exakt proportional aus dem zurückgelegten Weg der Spindelmutter ergibt.

Das Wegmeßsystem muß auch gegen elektrostatische Entladungen geschützt sein. Diese können am Schubrohr 2 und am Gleitring 7, als auch in den Spannung führenden Teilen auftreten. Durch eine entsprechende Wahl der Werkstoffe am Gleitring 7 und durch eine entsprechende Dimensionierung der Luft- und Kriechstrecken zwischen dem Schubrohr 2 und den elektrischen Anschlüssen und allen leitend verbundenen Teilen, läßt sich diesem entgegenwirken.

## Patentansprüche

1. Wegmeßsystem einer Lineareinheit,
a) wobei das Wegmeßsystem ein Führungsrohr (1) aufweist, in dem ein Schubrohr (2) gleitend geführt ist,
b) wobei an dem Schubrohr (2) ein Gleitring (7) angebracht ist, der eine mit zwei oder mehreren Schleifkontakten (8) bestückte Kontaktbrücke trägt,
c) wobei die Schleifkontakte (8) auf zwei parallel in dem Führungsrohr (1) in Längsrichtung eingelassenen Bahnen (11, 12) gleitend geführt sind, die aus einem elektrisch schlecht leitendem Material als Widerstandsbahn (11) und aus einem elektrisch gut leitendem Material als Leiterbahn (12) ausgebildet sind, und
d) wobei über die Kontaktbrücke (13) ständig der Meßwert zwischen beiden Bahnen (11, 12) abgegriffen wird, so daß der wegabhängige Widerstand der Widerstandsbahn (11) in die Messung eingeht,
**dadurch gekennzeichnet**,
e) daß das Schubrohr (2) eine Spindel (3) umgibt, auf der eine Spindelmutter (4) gleitet, welche direkt oder über eine ausrückbare Kupplung mit dem Schubrohr (2) verbunden ist, und
f) daß der Gleitring (7) und die Spindelmutter (4) an unterschiedlichen Punkten des Schubrohres (2) befestigt sind.

2. Wegmeßsystem nach Anspruch 1, ***dadurch gekennzeichnet,* daß** zur Drehsicherung der Kontaktbrücke (13) in dem Führungsrohr (1) in Längsrichtung Führungsbahnen (10) eingelassen sind und in dem Gleitring (7) Aussparungen (14), die den Führungsbahnen (10) gegenüberliegen, eingebracht sind und daß zwischen den Führungsbahnen (10) und den Aussparungen (14) Kugeln (9) eingefügt sind, die in den Führungsbahnen gleiten.

3. Wegmeßsystem nach Anspruch 1, ***dadurch gekennzeichnet,* daß** den Bahnen (11 u. 12) eine konstante elektrische Spannung zugeführt ist, so daß an der Leiterbahn (12) ständig eine Spannung abgreifbar ist, die sich aus dem Widerstandsverhältnis des elektrischen Widerstandes in der Widerstandsbahn (11) an der Kontaktbrücke (13) in Abhängigkeit des von der Kontaktbrücke zurückgelegten Weges ergibt.

4. Wegmeßystem nach den Ansprüchen 1 bis 3, ***dadurch gekennzeichnet,* daß** der Gleitring (7) aus einem isolierenden Werkstoff besteht und daß die Luft- und Kriechstrecken zwischen dem Schubrohr (2) und den Spannung führenden Teilen so dimensioniert sind, daß keine elektrostatischen Entladungen stattfinden.

5. Wegmeßsystem nach einem der Ansprüche 1 bis 4, **dadurch gekennzeichnet, daß** das Führungsrohr (1) wasserdicht und schmutzgeschützt ausgebildet ist.

## Claims

1. Distance measuring system of a linear unit,
(a) with the distance measuring system comprising a guiding tube (1) in which a pushing tube (2) is guided for a sliding movement,
(b) wherein a sliding ring (7) is attached on said pushing tube (2), which carries a contact bridge equipped with two or more sliding contacts (8),
(c) with said sliding contacts (8) being guided for a parallel movement on two paths (11, 12) formed in said guiding tube (1) along the longitudinal direction, which paths are made of a material presenting poor electrical conduction characteristics and serving as resistor path (11) and of a material presenting good electrical conduction properties and serving as conductor path (12), and
(d) with the measured value being permanently tapped via said contact bridge between said two paths (11, 12) so that the resistance of said resistor path (11), which is dependent on the distance, is considered in the measurement,
**characterised in**
(e) that said pushing tube (2) surrounds a spindle (3) on which a spindle nut (4) slides which is connected to said pushing tube (2) directly or via a disengageable coupler, and
(f) that said sliding ring (7) and said spindle nut (4) are fastened on different points of said pushing tube (2).

2. Distance measuring system according to Claim 1, ***characterised in* that** guiding paths (10) are formed in said guiding tube (1) in the longitudinal direction for securing said contact bridge (13) against rotation and that recesses (14) opposite to said guiding paths (10) are formed in said sliding ring (7), and that balls (9) are inserted between said guiding paths (10) and said recesses (14), which slide in said guiding paths.

3. Distance measuring system according to Claim 1, ***characterised in* that** a constant electrical voltage is supplied to said paths (11 and 12) so that a voltage can be permanently tapped on said conductor path (12), which derives from the resistance ratio of the electrical resistance value in said resistor path (11) on said contact bridge (13) as a function of the distance covered by said contact bridge.

4. Distance measuring system according to the Claims 1 to 3, ***characterised in* that** said sliding ring (7) consists of an insulating material and that the air and creeping distances between said pushing tube (2) and the live parts are so dimensioned that electrostatic discharges do not occur.

5. Distance measuring system according to any of the Claims 1 to 4, ***characterised in* that** said guiding tube (1) presents a watertight configuration protected from penetrating dirt.

## Revendications

1. Système de mesure de déplacement d'une unité linéaire,
(a) ce système de mesure de déplacement comprenant un tube de guidage (1) dans lequel un tube poussoir (2) est guidé pour un mouvement glissant,
(b) dans lequel une bague glissante (7) est monté sur ledit tube poussoir (2), qui porte un pont aux contacts équipé de deux ou plus contacts glissants (8),
(c) auxdits contacts glissants () étant guidés pour un mouvement, l'un en parallèle à l'autre, sur deux voies (11, 12) formées dans ledit tube de guidage (1) selon la direction longitudinale, lesquelles sont faites en un matériau à mauvais conduction électrique, qui sert en tant que voie à résistance (11), et en un matériau à bonne conduction électrique, qui sert en tant que voie conductrice (12), et
(d) à la valeur mesurée étant prélevée, en continu, via ledit pont aux contacts entre lesdits deux voies (11, 12) de façon, que la résistance de ladite voie résistante (11), qui dépend de la distance, soit considérée dans la mesure,
caractérisé en ce
(e) que ledit tube poussoir (2) entoure une broche (3) sur lequel glisse un écrou de broche (4), qui est relié audit tube poussoir (2) directement ou via un coupleur apte à être dégagé de la prise, et
(f) que ladite bague glissante (7) et ledit écrou de broche (4) est fixée aux points différents dudit tube poussoir (2).

2. Système de mesure de déplacement selon la revendication 1, ***caractérisé en ce* que** des voies de guidage (10) sont formées dans ledit tube de guidage (1) selon la direction longitudinale afin d'empêcher une rotation dudit pont aux contacts (13), et **en ce que** des évidements (14) opposés auxdites voies de guidage (10) sont formés dans ladite bague glissante (7), et **en ce que** des sphères (9) sont insérés entre lesdites voies de guidage (10) et lesdits évidements (14), qui glissent dans lesdites voies de guidage.

3. Système de mesure de déplacement selon la revendication 1, ***caractérisé en ce* qu'**une tension électrique constante est alimentée auxdites voies (11 et 12) de façon, qu'on puisse prélever, en continu, une tension sur ladite voie conductrice (12), qui est dérivée du rapport de résistance de ladite valeur de résistance électrique dans ladite voie résistante (11) sur ledit pont aux contacts (13) en fonction de la distance sur laquelle se déplace ledit pont aux contacts.

4. Système de mesure de déplacement selon les revendications 1 à 3, ***caractérisé en ce* que** ladite bague glissante (7) consiste en un matériau isolant, et **en ce que** les écarts de l'air et de fluage entre ledit tube poussoir (2) l'apparition des décharges électriques.

5. Système de mesure de déplacement selon une quelconque des revendications 1 à 4, ***caractérisé en* ce que** ledit tube de guidage (1) présente une configuration étanche à l'eau et protégée contre la pénétration des particules d'impuretés.
